# EUROPEAN PATENT SPECIFICATION

(11) **EP 3 500 429 B1**
(45) Date of publication and mention of the grant of the patent: **06.12.2023**
(21) Application number: 17884896.6
(22) Date of filing: 22.12.2017
(51) Int. Cl.: B32B 27/08, B32B 27/32, B41M 5/52, B41M 5/50, B32B 7/06, B32B 7/12, B32B 25/04, B32B 25/08, B32B 25/16, B32B 27/10, B32B 27/16, B32B 27/18, B32B 27/30, B32B 27/34, B32B 27/36

(54) **COATED, METALLIZED FILMS**
BESCHICHTETE METALLISIERTE FOLIEN
FILMS MÉTALLISÉS REVÊTUS

(30) Priority: 22.12.2016 US 201662438361 P
(43) Date of publication of application: 26.06.2019
(73) Proprietor: Jindal Innovation Center SRL, 6761 Virton (BE)
(72) Inventor: SUNDARARAMAN, Anand, 2510 Strassen (LU); HINMAN, Daniel L., Farmington NY 14425 (US)
(74) Representative: Hindles Limited
(86) International application number: PCT/US2017/068160
(87) International publication number: WO 2018/119381

(56) References cited:
- WO-A1-2014/070241
- US-A1- 2002 182 435
- US-A1- 2003 026 932
- US-A1- 2003 026 932
- US-A1- 2008 070 050
- US-A1- 2012 251 775
- US-B1- 6 720 065

## Description

### REFERENCE TO RELATED APPLICATIONS

This application is a Patent Cooperation Treaty application, which claims priority to United States provisional patent application serial number 62/438, 361 filed on December 22, 2016.

### FIELD

This disclosure relates to compositions, structures, and methods for making coated metallized films with printable coatings and remarkable metal appearance that may include additional functionalized layer(s) and/or be laminated along with other desirable properties in the film and laminate industries.

### BACKGROUND

Metallized films are interesting for their mirror-like appearance and barrier properties, and may be used in various applications, such as packaging and labeling. However, printability of metallic films is often low and requires additional steps such as treating and/or a topcoat. This is especially apparent for energy cured ultra violet (UV) ink systems. Unfortunately, the additional steps may decrease the metallic sheen, gloss and/or distinctness of image ("DOI") that is reflected on the metallic surface due, for example, to the presence of antiblock or other ingredients that introduces surface roughness, or difference in the refractive index of the coating as compared to the metallic surface, or both. US 2003/0026932A1 describes a multilayer laminate comprising a base layer having a first surface and a second surface, and comprising a metallizable polymer; a metal layer having a first surface and a second surface wherein the first surface of the metal layer is in contact with and adhered to the second surface of the base layer; a clear polymer topcoat layer having a first surface and a second surface wherein the second surface is in contact with and adhered to the first surface of the base layer; and a first adhesive layer having a first surface and a second surface wherein the first surface of the adhesive layer is in contact with and adhered to the second surface of the metal layer. WO 2014/070241A1 describes a coated flexible oriented polypropylene film having three or more layers comprising a core layer of polypropylene; a sealing layer; a metal layer opposite the sealing layer, thereby sandwiching the core; and a printable coating adhered to the metal layer, thereby sandwiching the metal layer between the core layer and printable coating, wherein the printable coating comprises at least one primer layer of an ethylene acrylic acid-based copolymer, ethylene alkyl ester-based copolymer, or blend thereof, and at least one print layer comprising an acrylic styrene copolymer.

Additional and alternative problems may occur, including but not limited to: (1) blocking by a print-receptive coating when the coated, metallized film is stored in a roll; (2) scratching or otherwise affecting the metallic appearance of a metallized film during application of a print-receptive coating; and/or (3) discoloring the metallic appearance of a film when a print-receptive coating followed by metallization due to potential degassing of the print-receptive coating in the metallization chamber. This disclosure addresses such problems and/or others.

### SUMMARY

This disclosure provides compositions and methods for a biaxially oriented film that includes a base film having a first side and a second side. Further, the biaxially oriented film includes a metallized layer on the first side and a print-receptive coating on the second side, wherein the print-receptive coating comprises one or more acrylic polymers and the biaxially oriented film has no blocking tendency. Further still, the biaxially oriented film may include one or more coatings on a side of the metallized layer that faces away from the base film. The biaxially oriented film also has a distinctness of image decrease of ≤ 15% in a machine direction and may have a distinctness of image decrease of ≤ 30% in a transverse direction for the metallized layer when measured atop the print-receptive coating.

### DETAILED DESCRIPTION

Below, directional terms, such as "above," "below," "upper," "lower," "front," "back," "top," "bottom," etc., are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only, and the terms are not meant to limit the disclosure.

Various specific embodiments, versions and examples are described now, including exemplary embodiments and definitions that are adopted herein for purposes of understanding. While the following detailed description gives specific preferred embodiments, those skilled in the art will appreciate that these embodiments are exemplary only, and that the disclosure may be practiced in other ways. For purposes of determining infringement, the scope of the invention is determined by the claims.

Generally, disclosed are compositions and methods for metallic films having a print-receptive coating located on the side opposite of the metallized side, wherein the print-receptive coating may result in minimal to no change in appearance, gloss, and/or DOI of the metallic layer and also may provide the metallized film with enhanced printability. Further, the applied, print-receptive coating(s) may exhibit antiblocking properties. And further still, a suitable adhesive may be applied on top of the metallic layer to result in the following structure: adhesive/metallized layer/core/print-receptive coating. In further example embodiments, such a structure of the substrate may exclude the adhesive layer. Noteworthy is that the substrate may also optionally include tie layers as intermediate layer(s) on one or both sides of the core, or both. In addition, the metallized film's metallized layer may or may not be treated and/or include polymer coating(s) for primer(s). In further example embodiments, the metallized, substrate or multilayered film may include one or more coatings on the metallized layer as the outer layer to result in the following structure: top coating/metallized layer/core/print-receptive coating. In one instance, a primer may be applied on the metal surface followed by the top coating. In another instance, the primer may provide improved anchorage of the top coat to the metallized film without affecting the appearance of the film. In yet another instance the top coating may be an adhesive-receptive coating that may provide good anchorage of the adhesive to the top coat and the metallized film. Another example embodiment includes a heat- or energy-activatable coating that is applied on the metallized side of the film. Such a coating may provide good block-resistance properties when kept in roll form at room temperature and behave as adhesive on exposure to heat or other energy source, which is not limited to UV and IR radiation. In another instance, a sealing coating may be applied as top coat providing desired sealing properties. In yet another instance, a top coating, not limited to polyvinylidene chloride ("PVDC"), may be applied as barrier top coating on the metal surface of the film. Such films may be used in applications that require barrier performance from oil or chemicals migrating from the substrate for example tire labels applications.

As used herein, "polymer" may be used to refer to homopolymers, copolymers, interpolymers, terpolymers, etc. Likewise, a "copolymer" may refer to a polymer comprising two monomers or to a polymer comprising three or more monomers.

As used herein, "intermediate" is defined as the position of one layer of a multilayered film wherein said layer lies between two other identified layers. In some embodiments, the intermediate layer may be in direct contact with either or both of the two identified layers. In other embodiments, additional layers may also be present between the intermediate layer and either or both of the two identified layers.

As used herein, "substantially free" is defined to mean that the referenced film layer is largely, but not wholly, absent a particular component. In some embodiments, small amounts of the component may be present within the referenced layer as a result of standard manufacturing methods, including recycling of film scraps and edge trim during processing.

The term "crystalline," as used herein, characterizes those polymers which possess high degrees of inter- and intra-molecular order. The polypropylene has a heat of fusion (H_{f}) greater than 60 J/g or 70 J/g or 80 J/g, as determined by DSC analysis. The heat of fusion is dependent on the composition of the polypropylene. The thermal energy for the highest order of polypropylene is estimated at 189 J/g that is, 100% crystallinity is equal to a heat of fusion of 189 J/g. A polypropylene homo-polymer will have a higher heat of fusion than a copolymer or blend of homo-polymer and copolymer. Also, the polypropylenes useful herein may have a glass transition temperature (ISO 11357-1, T_{g}) preferably between -20°C or -10°C or 0°C to 10°C or 20°C or 40°C or 50°C. The polypropylenes have a Vicat softening temperature (ISO 306, or ASTM D 1525) of greater than 120°C or 110°C or 105°C or 100°C, or within a range of from 100°C or 105°C to 110°C or 120°C or 140°C or 150°C or a particular range of from 110°C or 120°C to 150°C.

As used herein, "elastomer" is defined as a propylene-based or ethylene-based copolymer that may be extended or stretched with force to at least 100% of its original length, and upon removal of the force, rapidly (e.g., within 5 seconds) returns to its original dimensions.

As used herein, "plastomer" is defined as a propylene-based or ethylene-based copolymer having a density in the range of 0.850 g/cm³ to 0.920 g/cm³ and a DSC melting point of at least 40 °C.

### Core Layer

As is known to those skilled in the art, the core layer of a multilayered film is most commonly the thickest layer and provides the foundation of the multilayered structure. In some embodiments, the core layer consists essentially of non-oriented, monoaxially oriented, or biaxially oriented polymers, such as biaxially oriented polypropylene ("BOPP"), biaxially oriented polyester ("BOPET"), biaxially oriented polylactic acid ("BOPLA"), and combinations thereof, and may be substantially free from other components. In alternate embodiments, the core may also contain lesser amounts of additional polymer(s) selected from the group consisting of ethylene polymer, ethylene-propylene copolymers, ethylene-propylene-butene terpolymers, elastomers, plastomers, different types of metallocene-LLDPEs (m-LLDPEs), and combinations thereof.

The core layer may further include a hydrocarbon resin. Hydrocarbon resins may serve to enhance or modify the flexural modulus, improve processability, or improve the barrier properties of the film. The resin may be a low molecular weight hydrocarbon that is compatible with the core polymer. Optionally, the resin may be hydrogenated. The resin may have a number average molecular weight less than 5000, preferably less than 2000, most preferably in the range of from 500 to 1000. The resin may be natural or synthetic and may have a softening point in the range of from 60 °C to 180 °C.

Suitable hydrocarbon resins include, but are not limited to petroleum resins, terpene resins, styrene resins, and cyclopentadiene resins. In some embodiments, the hydrocarbon resin is selected from the group consisting of aliphatic hydrocarbon resins, hydrogenated aliphatic hydrocarbon resins, aliphatic/aromatic hydrocarbon resins, hydrogenated aliphatic aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins and rosin esters, hydrogenated rosins and rosin esters, and combinations thereof.

The amount of such hydrocarbon resins, either alone or in combination, in the core layer is preferably less than 20 wt %, more preferably in the range of from 1 wt % to 5 wt %, based on the total weight of the core layer.

The core layer may further comprise one or more additives such as slip agents, antioxidants, anti-fog agents, anti-static agents, fillers, moisture barrier additives, gas barrier additives, and combinations thereof, as discussed in further detail below. A suitable anti-static agent is ARMOSTAT^{™} 475 (commercially available from Akzo Nobel of Chicago, Ill.).

Preferably, the total amount of additives in the core layer comprises up to about 20 wt % of the core layer, but some embodiments may comprise additives in the core layer in an amount up to about 30 wt % of the core layer.

The core layer preferably has a thickness in the range of from about 5 µm to 100 µm, more preferably from about 5 µm to 50 µm, most preferably from 5 µm to 25 µm.

### Tie Layer(s)

Tie layer(s) of a multilayered film is typically used to connect two other layers of the multilayered film structure, *e.g.,* a core layer and a sealant layer, and is positioned intermediate these other layers. The tie layer(s) may have the same or a different composition as compared to the core layer.

In some embodiments, the tie layer is in direct contact with the surface of the core layer. In other embodiments, another layer or layers may be intermediate the core layer and the tie layer. The tie layer may comprise one or more polymers. In addition, the polymers may include C₂ polymers, maleic-anhydride-modified polyethylene polymers, C₃ polymers, C₂C₃ random copolymers, C₂C₃C₄ random terpolymers, heterophasic random copolymers, C₄ homopolymers, C₄ copolymers, metallocene polymers, propylene-based or ethylene-based elastomers and/or plastomers, ethyl-methyl acrylate (EMA) polymers, ethylene-vinyl acetate (EVA) polymers, polar copolymers, and combinations thereof. For example, one polymer may be a grade of VISTAMAXX^{™} polymer (commercially available from ExxonMobil Chemical Company of Baytown, Tex.), such as VM6100 and VM3000 grades. Alternatively, suitable polymers may include VERSIFY^{™} polymer (commercially available from The Dow Chemical Company of Midland, Mich.), Basell CATALLOY^{™} resins such as ADFLEX^{™} T100F, SOFTELL^{™} Q020F, CLYRELL^{™} SM1340 (commercially available from Basell Polyolefins of The Netherlands), PB (propylene-butene-1) random copolymers, such as Basell PB 8340 (commercially available from Basell Polyolefins of The Netherlands), Borealis BORSOFT^{™} SD233CF, (commercially available from Borealis of Denmark), EXCEED^{™} 1012CA and 1018CA metallocene polyethylenes, EXACT^{™} 5361, 4049, 5371, 8201, 4150, 3132 polyethylene plastomers, EMCC 3022.32 low density polyethylene (LDPE) (commercially available from ExxonMobil Chemical Company of Baytown, Tex.).

In some embodiments, the tie layer may further comprise one or more additives such as slip agents, antioxidants, anti-fog agents, anti-static agents, anti-block agents, fillers, moisture barrier additives, gas barrier additives, and combinations thereof, as discussed in further detail below.

The thickness of the tie layer is typically in the range of from about 0.50 to 25 µm, preferably from about 0.50 µm to 12 µm, more preferably from about 0.50 µm to 8 µm, and most preferably from about 2.5 µm to 5 µm. However, in some thinner films, the tie layer thickness may be from about 0.5 µm to 4 µm, or from about 0.5 µm to 2 µm, or from about 0.5 µm to 1.5 µm.

### Skin Layer(s)

In some embodiments, the skin layer is contiguous to the core layer. Furthermore, the skin layer may be on one or both sides of the core layer, and each skin layer may have the same or a different composition. In addition, each skin layer may have the same or different composition as compared to the core. In still other embodiments, one or more other layers may be intermediate the core layer and the skin layer. The skin layer includes a polymer that is suitable for processing of the film during manufacturing process, that is provides appropriate fit for make properties. These properties include and is not limited to acceptable coefficient of friction during extrusion and winding, minimal to no telescoping or walking of the film during winding stage and roll block resistance. Suitable skin layers include one or more polymers, including homopolymers, copolymers of ethylene, propylene, butene, hexene, heptene, octene, and combinations thereof.

The thickness of the skin layer is typically in the range of from about 0.10 µm to 7.0 µm, preferably about 0.10 µm to 4 µm, and most preferably about 1 µm to 3 µm. In some film embodiments, the sealant layer thickness may be from about 0.10 µm to 2 µm, 0.10 µm to 1 µm, or 0.10 µm to 0.50 µm. In some commonly preferred film embodiments, the sealant layer has a thickness in the range of from about 0.5 µm to 2 µm, 0.5 µm to 3 µm, or 1 µm to 3.5 µm.

### Metallizable Layer

In one example one or both side of the skin layers termed as metallizable skin may be metallized. In another instance a metallizable skin layer, also referred to as metallized layer, may be contiguous to the core layer and is on the side of the core layer that is opposite of the print-receptive coating side. Tie layer(s) may exist between the core layer and the metallizable layer. Skin layer(s) may be provided to improve the film's barrier properties, processability, printability, and/or compatibility for coating, metallizing, and laminating to other films or substrates.

In some embodiments, the metallizable skin layer comprises at least one polymer selected from the group consisting of a polyethylene polymer or copolymer, a polypropylene polymer or copolymer, an ethylene-propylene copolymer, an ethylene-propylene-butene terpolymer, a propylene-butene copolymer, an ethylene-vinyl alcohol polymer, polyamide polymer or copolymer, and combinations thereof. Preferably, the polyethylene polymer is high-density polyethylene (HDPE), such as HD-6704.67 (commercially available from ExxonMobil Chemical Company of Baytown, Tex.), M-6211 and HDPE M-6030 (commercially available from Equistar Chemical Company of Houston, Tex.). A suitable ethylene-propylene copolymer is Fina 8573 (commercially available from Fina Oil Company of Dallas, Tex.). Preferred EPB terpolymers include Chisso 7510 and 7794 (commercially available from Chisso Corporation of Japan). For coating and printing functions, the skin layer may preferably comprise a copolymer that has been surface treated. For metallizing or barrier properties, an HDPE or EVOH polymer may be preferred, such as one that has a melting peak of less than 160 °C.

The skin layer may also comprise processing aid additives, such as anti-block agents, anti-static agents, slip agents and combinations thereof, as discussed in further detail below.

The thickness of the metallizable skin layer depends upon the intended function of the skin layer, but is typically in the range of from about 0.50 µm to 3.5 µm, preferably from about 0.50 µm to 2 µm, and in many embodiments most preferably from about 0.50 µm to 1.5 µm. Also, in thinner film embodiments, the skin layer thickness may range from about 0.50 µm to 1.0 µm, or 0.50 µm to 0.75 µm. Additionally the surface roughness, surface chemistry, clarity of the film and the optical density of the metal layer, *i.e.,* containing metal or metal oxide, dictates the appearance of the metallic film.

### Additives

Additives that may be present in one or more layers of the multilayered films, include, but are not limited to slip agents, antioxidants, anti-fog agents, anti-static agents, anti-block agents, fillers, moisture barrier additives, gas barrier additives, gas scavengers, and combinations thereof. Such additives may be used in effective amounts, which vary depending upon the property required.

Slip agents may include higher aliphatic acid amides, higher aliphatic acid esters, waxes, silicone oils, and metal soaps. Such slip agents may be used in amounts ranging from 0.1 wt % to 2 wt % based on the total weight of the layer to which it is added. An example of a slip additive that may be useful is erucamide.

Non-migratory slip agents, used in one or more skin layers of the multilayered films, may include polymethyl methacrylate (PMMA). The non-migratory slip agent may have a mean particle size in the range of from about 0.5 µm to 8 µm, or 1 µm to 5 µm, or 2 µm to 4 µm, depending upon layer thickness and desired slip properties. Alternatively, the size of the particles in the non-migratory slip agent, such as PMMA, may be greater than 20% of the thickness of the skin layer containing the slip agent, or greater than 40% of the thickness of the skin layer, or greater than 50% of the thickness of the skin layer. The size of the particles of such non-migratory slip agent may also be at least 10% greater than the thickness of the skin layer, or at least 20% greater than the thickness of the skin layer, or at least 40% greater than the thickness of the skin layer. Generally spherical, particulate non-migratory slip agents are contemplated, including PMMA resins, such as EPOSTAR^{™} (commercially available from Nippon Shokubai Co., Ltd. of Japan). Other commercial sources of suitable materials are also known to exist. Non-migratory means that these particulates do not generally change location throughout the layers of the film in the manner of the migratory slip agents. A conventional polydialkyl siloxane, such as silicone oil or gum additive having a viscosity of 0.01 m²/s to 2 m²/s (10,000 to 2,000,000 centistokes) is also contemplated.

Suitable anti-oxidants may include phenolic anti-oxidants, such as IRGANOX^{®} 1010 (commercially available from Ciba-Geigy Company of Switzerland). Such an anti-oxidant is generally used in amounts ranging from 0.1 wt % to 2 wt %, based on the total weight of the layer(s) to which it is added.

Anti-static agents may include alkali metal sulfonates, polyether-modified polydiorganosiloxanes, polyalkylphenylsiloxanes, and tertiary amines. Such anti-static agents may be used in amounts ranging from about 0.05 wt % to 3 wt %, based upon the total weight of the layer(s).

Examples of suitable anti-blocking agents may include silica-based products such as SYLOBLOC^{®} 44 (commercially available from Grace Davison Products of Colombia, Md.), PMMA particles such as EPOSTAR^{™} (commercially available from Nippon Shokubai Co., Ltd. of Japan), or polysiloxanes such as TOSPEARL^{™} (commercially available from GE Bayer Silicones of Wilton, Conn.). Such an anti-blocking agent comprises an effective amount up to about 3000 ppm of the weight of the layer(s) to which it is added.

Useful fillers may include finely divided inorganic solid materials such as silica, fumed silica, diatomaceous earth, calcium carbonate, calcium silicate, aluminum silicate, kaolin, talc, bentonite, clay and pulp.

Suitable moisture and gas barrier additives may include effective amounts of low-molecular weight resins, hydrocarbon resins, particularly petroleum resins, styrene resins, cyclopentadiene resins, and terpene resins.

Optionally, one or more skin layers may be compounded with a wax or coated with a wax-containing coating, for lubricity, in amounts ranging from 2 wt % to 15 wt % based on the total weight of the skin layer. Any conventional wax, such as, but not limited to Carnauba^{™} wax (commercially available from Michelman Corporation of Cincinnati, Ohio) that is useful in thermoplastic films is contemplated.

### Surface Treatment

One or both of the outer surfaces of the multilayered films, and, in particular, the skin layers, may be surface-treated under normal atmospheric conditions or vacuum to increase the surface energy to render the film receptive to metallization, coatings, printing inks, adhesives, and/or lamination. The surface treatment may be carried out according to one of the methods known in the art including corona discharge, flame, plasma, chemical treatment, or treatment by means of a polarized flame.

The surface treatment may be conducted during or after orientation, e.g., for example, in a metallization chamber, by any method including corona, flame, plasma, or combinations thereof. Preferred, is low-pressure, plasma treatment and its combinations with flame or normal atmospheric plasma treatment. The surface of the skin layer may be treated by exposure to corona, flame, or plasma while the film is continuously passing between spaced electrodes or in close proximity with the stable flame cones. The intensity of the treatment is set to impart to a surface tension level ≥ 0.035 N/m (≥ 35 dynes/cm) in accordance with ASTM D 2578-84. Known corona-treatment procedures contemplated herein are, for example, any of those disclosed in U.S. Patent Nos. 3,255,099 and 4,297,187; EP Patent No. 1,125,972; and by Villermet et, Surface and Coatings Technology, 174-175, 899 (2003). Known flame-treatment procedures are, for example, any of those disclosed in U.S. Patent Nos. 3,255,099; 4,297,187; 3,028,622; 3,255,034; 3,347,697; and 4,239,827. The low-pressure plasma treatment may use an evacuable reaction chamber that is capable of maintaining treatment conditions, *i.e.,* pressure, a flow rate of gases, power voltage, formation of plasma species, a deposition rate, etc. The skin layer to be treated may be placed in or passed through the evacuable chamber. The intensity of the treatment is set to impart to a surface tension level ≥ 0.035 N/m (≥ 35 dynes/cm) in accordance with ASTM D 2578-84. A premixed flame may use air or oxygen-enriched air as an oxidizer and a gaseous hydrocarbon as a fuel. Typical hydrocarbon fuels include natural gas, methane, ethane, propane, butane, ethylene, hydrogen, liquefied petroleum gas, acetylene, or blends thereof. Flames may be fuel-lean, stoichiometrically balanced, or fuel-rich. Suitable examples of corona gases, components of a flame fuel mixture, and plasma gases comprise noble, inert, oxidizing, reducing, or reactive monomeric or oligomeric gases in various combinations and ratios, for example, such as helium (He), argon (Ar), nitrogen (N₂), oxygen (O₂), hydrogen (H₂), ethylene (C₂H₂), hydrogen peroxide (H₂O₂), water (H₂O), ammonia (NH₃), carbon dioxide (CO₂), nitrous oxide (N₂O), hydrogen sulfide (H₂S), air, silanes, siloxanes, or mixtures thereof. In one embodiment, the gas combination is a mixture of noble or inert gases with oxidizing or reducing gases in various ratios. In one instance, the metallizable skin may be flame- or corona-treated during orientation process only. In another instance, the metallizable skin may be flame- or corona-treated during orientation process and then a plasma treatment may be carried out before metallization process. In yet another instance, the metallizable skin may be flame- or corona-treated during orientation process then a plasma treatment may be carried out before metallization process followed by another plasma treatment may be carried out on the metal surface after metallization termed as post plasma treatment.

### Metallization

The multilayered films may be primed, coated and then metallized. For example, the outer surface (*i.e.,* side facing away from the core) of the skin layer, which is on the opposite side of the core as compared to the printable side, may undergo metallization after optionally being treated. Metallization may be carried out through conventional methods, such as vacuum metallization by deposition of a metal layer such as aluminum, copper, silver, chromium, or mixtures thereof.

### Coatings

In some embodiments, one or more coatings, such as not limited to barrier performance, seal performance, slip performance, anti-scratch performance or print-receptiveness, may be applied to outer surface(s) of the multilayered films. Such coatings may include acrylic polymers, such as ethylene acrylic acid (EAA), ethylene methyl acrylate copolymers (EMA), polyvinylidene chloride (PVdC), poly(vinyl)alcohol (PVOH) and EVOH. The coatings may be applied by any coating process known in the art and not limited to in-line or out of line gravure coating, rod coating, slot die coating, dip coating or by co-extrusion and/or lamination.

The PVdC coatings that are suitable for use with the multilayered films are any of the known PVdC compositions heretofore employed as coatings in film manufacturing operations, *e.g.,* any of the PVdC materials described in U.S. Pat. No. 4,214,039, U.S. Pat. No. 4,447,494, U.S. Pat. No. 4,961,992, U.S. Pat. No. 5,019,447, and U.S. Pat. No. 5,057,177.

Known vinyl alcohol-based coatings, such as PVOH and EVOH, that are suitable for use with the multilayered films include VINOL^{™} 125 or VINOL^{™} 325 (both commercially available from Air Products, Inc. of Allentown, Pa.). Other PVOH coatings are described in U.S. Pat. No. 5,230,963.

Before applying the coating composition to the appropriate substrate, the outer surface(s) of the film may be treated as noted herein to increase its surface energy. This treatment may be accomplished by employing known techniques, such as flame treatment, plasma, corona discharge, film chlorination, e.g., exposure of the film surface to gaseous chlorine, treatment with oxidizing agents such as chromic acid, hot air or steam treatment, flame treatment and the like. Although any of these techniques is effectively employed to pre-treat the film surface, a frequently preferred method is corona discharge, an electronic treatment method that includes exposing the film surface to a high voltage corona discharge while passing the film between a pair of spaced electrodes. After treatment of the film surface, the coating composition is then applied thereto and optionally metallized.

### Primers

An intermediate primer coating may be applied to multilayered films. In this case, the film may be first treated by one of the foregoing methods to provide increased active adhesive sites thereon and to the thus-treated film surface there may be subsequently applied a continuous coating of a primer material. Such primer materials are well known in the art and include, for example, epoxy, polyethylene imine) (PEI), and polyurethane materials. U.S. Pat. No. 3,753,769, U.S. Pat. No. 4,058,645 and U.S. Pat. No. 4,439,493, discloses the use and application of such primers. The primer provides an overall adhesively active surface for thorough and secure bonding with the subsequently applied coating composition and may be applied to the film by conventional solution coating means, and not limited to in-line or out of line gravure coating, rod coating, slot die coating, dip coating or by co-extrusion.

The coating composition may be water-based emulsions that may use one or more surfactants to disperse and stabilize the polymer(s) and additives comprising the coating composition. The coating composition may be applied to the film as a solution, one prepared with an organic solvent such as an alcohol, ketone, ester, and the like. It is preferable that the coating composition be applied to the treated surface in any convenient manner, such as by gravure coating, roll coating, dipping, spraying, and the like. The excess aqueous solution may be removed by squeeze rolls, doctor knives, and the like.

### Orientation

The embodiments include biaxial orientation of the multilayered films. Orientation in the direction of extrusion is known as machine direction (MD) orientation. Orientation perpendicular to the direction of extrusion is known as transverse direction (TD) orientation. Orientation may be accomplished by stretching or pulling a film first in the MD followed by TD orientation. Blown films or cast films may also be oriented by a tenter-frame orientation subsequent to the film extrusion process, again in one or both directions. Orientation may be sequential or simultaneous, depending upon the desired film features. Preferred orientation ratios are commonly from between about three to about six times the extruded width in the machine direction and between about four to about ten times the extruded width in the transverse direction. Typical commercial orientation processes are tenter process, blown film, and LISIM technology. Further, the working conditions, temperature settings, lines speeds, etc. will vary depending on the type and the size of the equipment used. Nonetheless, described generally here is one method of making the films described throughout this specification. In a particular embodiment, the films are formed and biaxially oriented using the tentered method.

The biaxial orientation may also be carried out simultaneously by orienting on a line which utilizes linear motors to directly propel opposed pairs of tenter clips synchronously. The use of linear motors to directly propel tenter clips to effect simultaneous biaxial stretching is disclosed in U.S. Patent No. 4,853,602 to Hommes et al.*.*

The biaxial orientation of the substrate, including any preheating step as well as the stretching steps, may be performed using stretch temperatures in the range of from above the glass transition temperature (T_{g}) of the substrate to near the crystalline melting point (Tₘ) of the substrate. More specifically, orientation in the MD is conducted at from about 70°C to 30 about 130°C, more preferably from about 70°C to about 120°C. The film is typically heat set to a temperature between about 70°C and 100°C after the MD orientation. The film is then reheated and stretched in the TD. Orientation in the TD is conducted at from about 120°C to about 150°C, more preferably from about 120°C to about 140°C. The skilled artisan will understand that the orientation temperature employed in a particular situation will generally depend upon the residence time of the base sheet and the size of the rolls. Apparatus temperature higher than the Tm of the polyolefin sheet may be appropriate if the residence time is short. The skilled artisan also understands that the temperatures involved in these processes are in relation to the measured or set temperatures of the equipment rather than the temperature of the polyolefin itself, which generally cannot be directly measured.

The oriented polymeric substrate included in embodiments of the invention may comprise a single or multilayered, oriented, polymeric film, *e.g.,* an oriented polypropylene film. The substrate has an adhesive side and a print side. In some embodiments, the oriented polymeric substrate includes a core layer in combination with one or more optional tie-layers located between the core and opposing surface layers. The layers of the oriented polymeric substrate may be coextruded, but not necessarily. In some embodiments, the core layer of the oriented polymeric substrate may comprise one or more tie layers. When present, tie layers are placed at the exterior portion of the core layer to act as interface for contacting the first and/or second skin layer. For example, in one embodiment, the tie layers form the outer portions of the core layer such that the tie layers are from the region between an interior portion of the core layer and the first and/or second skin layers. The tie layers may comprise any polymer that holds together the two layers to be joined. While the tie layers are described as a portion of the core layer, one skilled in the art will appreciate that this description is a formality and tie layers may also be described as separate layers, formed by coextrusion, and may be the same or different composition as the interior portion of the core. The core layer of the structures of the present invention comprises polypropylene, highly crystalline polypropylene, high density polyethylene, or blends thereof. In other embodiments, the core and optional tie layers of the oriented multilayer film may comprise polymers containing propylene, ethylene, isotactic polypropylene ("iPP"), high crystallinity polypropylene ("HCPP"), low crystallinity polypropylene, isotactic and syndiotactic polypropylene, ethylene-propylene ("EP") copolymers, and combinations thereof. In particular embodiments, the core layer comprises propylene homopolymer having a melt flow rate of 1.0 g/10 min. to about 10 g/10 min., preferably 1.5.0 g/10 min. to about 3.5 g/10 min., 30 measured according to ASTM D-1238 at 230°C/2.16kg. In one embodiment, the polypropylene is Polypropylene 4912 from ExxonMobil Chemical Company of Baytown, Texas and comprises 96% of the thickness of the polymeric substrate. In another embodiment, the polypropylene is Polypropylene PPH4050 from Total Petrochemicals. Multilayer films having three or more layers, *e.g.,* five layers and sometimes even seven layers, are contemplated. Five-layer films may include a core layer, two skin layers, and an intermediate layer between the core layer and each skin layer, such as disclosed in U.S. Patent Nos. 5,209,854 and 5,397,635. The skin layers may include a copolymer (*i.e.,* a polymer comprising two or more different monomers) of propylene and another olefin such as ethylene and/or 1-butene.

### Metallizable Skin Layer Adhesive-Side

In embodiments, where the polymeric substrate comprises a multilayer film, the polymeric substrate includes an metallizable skin layer to one side of the core layer. The metallizable-skin layer may comprise any suitable film-forming polymer. Generally, the composition of the metallizable-side skin layer is selected to adhere sufficiently to the underlying core/tie layer composition and the metal layer if present. Typically, when the film is coextruded the thickness of a skin layer may range from about 1% to about 18%, preferably about 1.5% to about 5%, of the total polymeric substrate thickness. In certain embodiments, the metallizable skin layer comprises a polymer containing propylene, ethylene, isotactic polypropylene ("iPP"), high crystallinity polypropylene ("HCPP"), low crystallinity polypropylene, isotactic and syndiotactic polypropylene, propylene-ethylene copolymer, and mixtures thereof. In particular embodiments, the adhesive-side skin layer comprises a heat-sealable polymer composition, e.g., a propylene-ethylene random copolymer having a melt flow rate of 1.0 20 g/10 min. to about 10 g/10 min., preferably 5.0 g/10 min. to about 8.0 g/10 min., measured according to ASTM D-1238 at 230°C/2.16kg. The random propylene-ethylene copolymer may also have a density (according to ASTM D-1505) of 0.870 g/cm³ to about 0.930 g/cm³, preferably 0.880 g/cm³ to 0.900 g/cm³. One suitable polymer is Polypropylene 8573 HB from Total Petrochemicals U.S.A., Inc. In particular embodiments, the adhesive-side skin 25 layer comprises Polypropylene 8573 HB and forms about 2 wt% of the thickness of the polymeric substrate. In another particular embodiments, the adhesive-side skin layer comprises Polypropylene Adsyl^{®} 5C39F available from LyondellBasell and forms about 2 wt% of the thickness of the polymeric substrate.

### Print-Side Skin Layer

The print-side skin layer is formed on the side of the polymeric substrate opposite the metallizable adhesive side skin layer and may comprise any suitable film-forming polymer. Generally, the composition of the print-side skin layer is selected to adhere sufficiently to the underlying core/tie layer composition and the print side primer or top coating. Typically, when the film is coextruded, the thickness of a skin layer may range from about 1% to about 18%, preferably about 1.5% to about 5%, of the total polymeric substrate thickness. In certain embodiments, the print-side skin layer comprises a polymer containing propylene, ethylene, isotactic polypropylene ("iPP"), high crystallinity polypropylene ("HCPP"), low crystallinity polypropylene, isotactic and syndiotactic polypropylene, propylene-ethylene copolymer, and mixtures thereof. In particular embodiments, the print-side skin layer comprises a heat-sealable polymer composition, e.g., a propylene-ethylene random copolymer having a melt flow rate of 1.0 g/10 min. to about 10 g/10 min., preferably 5.0 g/10 min. to about 8.0 g/10 min., measured according to ASTM D-1238 at 230°C/2.16kg. The random propylene-ethylene copolymer may also have a density (according to ASTM D-1505) of 0.870 g/cm³ to about 0.930 g/cm³, preferably 0.880 g/cm³ to 0.900 g/cm³. One suitable polymer is Polypropylene 8573 HB from Total Petrochemicals 10 U.S.A., Inc. In particular embodiments, the print-side skin layer comprises Polypropylene 8573 HB and forms about 2 wt% of the thickness of the polymeric substrate.

When measured with an M2 Perthometer equipped with a stylus from Mahr Corporation, the average surface roughness (Rₐ and with output as defined in the operating manual of the Perthometer) of the print-side skin layer is ≤ 12.0 µm, preferably ≤ 10.0 µm more 15 preferably ≤ 7.0 µm, still more preferably ≤ 5.0 µm. Surface roughness may be controlled by a number of processing parameters including temperatures used in film formation and orientation (e.g., TD oven temperatures), skin resin type and amount or type of additives in skin layer. In particular embodiments, the print-side skin layer has a gloss value ≥ 70.0, preferably ≥ 75.0, preferably ≥ 80.0, when measured at 20° as measured by ASTM D 2457.

### INDUSTRIAL APPLICABILITY

The disclosed multilayered films may be stand-alone films, laminates, or webs in applications such as labels and packages. Or, the multilayered films may be sealed, coated, metallized, and/or laminated to other film structures. The disclosed multilayered films may be prepared by any suitable methods comprising the steps of co-extruding a multilayered film according to the description and claims of this specification, orienting and preparing the film for intended use such as by coating, printing, slitting, or other converting methods.

For some applications, it may be desirable to laminate the multilayered films to other polymeric film, liners, including release liners, or paper products for purposes such as labeling or packaging. These activities are typically performed by the ultimate end-users or film converters who process films for supply to the ultimate end-users.

### EXPERIMENTAL

As non-limiting examples, the following coated, metallized, BOPP films were produced as labels and having the structure shown in Table 1. The five-layers including and between the optionally treated skin layers is called the "base film" in later discussion of the examples. As stated elsewhere in this disclosure, the skin, tie and/or core layers in Table 1 may comprise different components in other example embodiments to provide a clear or non-clear base film, but the following examples make use of the same BOPP base film simply for ease of discussion.

**Table 1**

| Metallized Layer | Metallized |
|---|---|
| Optionally Treated Skin Layer | polypropylene and subjected to surface treatment ("treated") (100% Adsyl^{®} 5C39F available from LvondellBasell) |
| Tie Layer | polypropylene (30% ExxonMobil 4912 + 70% Total 3571) |
| Core Layer | polypropylene (80-100% ExxonMobil 4912 + 20-0% Total 3571) |
| Tie Layer | polypropylene (30% ExxonMobil 4912 + 70% Total 3571) |
| Optionally Treated Skin Layer | polypropylene and subjected to surface treatment ("treated") (100% Adsyl^{®} 5C39F available from LvondellBasell) |
| Print-Receptive Coating Layer | Print-Receptive Coating |

The optionally treated skin surface of the metallizable side, which is the non-print-side layer, is metallized via the application of a thin layer of metal. The treated surface may be metallized by vacuum deposition, or any other metallization technique, such as electroplating or sputtering. In one embodiment, the metal is aluminum, or any other metal capable of being vacuum deposited, electroplated, or sputtered, such as, for example, gold, zinc, copper, or silver. Typically, a metal layer is applied to an optical density (OD) of from 1.5 to 5.0 or preferably from 1.5 to 4.0, in accordance with the standard procedure of ANSI/NAPM IT2.19.

In addition to the above-described base film, the visual appearance or brilliance of the metallized film is dictated by the aluminum wire purity used for metallization process, and the laydown and smoothness of the aluminum metal surface. Metal brilliance is based on relative comparison to previous film samples stored in a reference book in the quality control laboratory. While this is an effective way to ensure that fit for use product is being generated, another more quantitative approach is employed in this invention termed as distinctness of image (DOI). DOI is a quantification of the distinctness or clarity of images reflected by the metallized film. The DOIs of the metallized films were measured using Elcometer 408 Gloss & DOI Meter that provided DOI values using the ElcoMaster Data Management software V2.0.53 provided with the instrument. The DOI measurements are carried out and reported on both in the machine direction (MD) and the transverse direction (TD) of the film. The scale values obtained with the measuring procedures of these methods range from 0 to 100 with a value of 100 representing perfect DOI (image clarity).

It is also surprising to note that the DOI measured on the print side of the film is affected by the optical density of the metal layer as Table 2 shows. Notably, Table 2's DOI data is for two different metallized base films, A and B, prior to coating these films with the print-receptive coating.

**Table 2**

| Metallized base film | Average Optical Density | DOI (MD) | DOI (TD) |
|---|---|---|---|
| A | 1.8 | 28.2 | 73.6 |
| B | 2.3 | 74 | 80.4 |

The print-receptive coating of the metallized BOPP base film in Table 1 was tested with various print-receptive coatings, which are described in Table 3. The optical density of the metallized film for Examples 1-5 were between 1.7 to 2.2. The average DOI range of the base film was MD = 22 to 32.

In another instant the print-receptive coating of the BOPP base film in Table 1 may be tested with various print-receptive coatings, which are described in Table 3. The optical density of the metallized film may be higher 2.2 to 2.6. The average DOI range of the base film was MD = 40 to 80. Such films with substantially higher DOI in MD or TD direction may be used in applications that require premium or high clarity appearance.

**Table 3**

| Example | Primer Coating | Print-Receptive Coating | Process |
|---|---|---|---|
| Control | None | None | None |
| 1 | polyethylene imine | acrylic polymer 1 | metallized then coated |
| 2 | None | acrylic polymer 1 | metallized then coated |
| 3 | polyethylene imine | blend of acrylic polymer 2 + acrylic polymer 3 with crosslinker | metallized then coated |
| 4 | blend of acrylic polymer 4 + ethylene acrylic acid copolvmer | cationic acrylic copolymer + adhesion promoter | metallized then coated |
| 5 | None | acrylic polymer 1 | coated then metallized |

Below is a legend for Table 3's components:
- Primer "polyethylene imine" is Epomin P1050, which was obtained from Nippon Shokubai
- "Acrylic polymer 1" is Neocryl FL5095, which was obtained from DSM Neoresins
- "Acrylic polymer 2" Neocryl A-1127, which was obtained from DSM Neoresins and is a commercially recommended acrylic coating for UV-ink adhesion applications
- "Acrylic polymer 3" Neocryl A-2091, which was obtained from DSM Neoresins and is a high T_{g} acrylic copolymer for reduced interaction with metal to minimize blocking
- "Crosslinker" is CX-100, which was obtained from DSM to improve ink adhesion
- "Acrylic copolymer 4" is 13Q51AA, which was obtained from Valspar Corporation
- "Ethylene acrylic acid copolymer" is Michem Prime 4983.15, which was obtained from Michelman
- "Cationic acrylic copolymer" was as Rhiza R111XL coating obtained from Owensboro Polymers
- "Adhesion promoter" is AAEM, *i.e.,* Acetoacetoxyethyl methacrylate monomer, which was obtained from Aldrich Chemicals

Methods for creating the disclosed metallized films, such as examples 1-4 in Tables 1 and 2, may include metallizing the base film and then applying the print-receptive coating to a non-metallized side of the metallized base film of Table 1 with an offset roll applicator that resulted in minimal to no scratches on the metallic layer's surface of the metallized film. Example 5 of Tables 1 and 2, however, was created differently in that the base film was coated, and then the coated, base film was metallized on the opposite side of the coated base film having the print-receptive coating.

The print-receptive coating used in the examples of Tables 1 and 2 may be described further by Table 4.

**Table 4**

| Quantity | | | | |
|---|---|---|---|---|
| Components | % Solids | PHR | Dry Weight(g) | Quantity (g) |
| FL5095 | 45 | 100 | 28.86 | 64.12 |
| Sylobloc^{®} 45 | 10 | 0.5 | 0.14 | 1.44 |
| deionized water | | | | 34.43 |
| | | Total PHR = 100.5 | Total Solids = 29 | |

| | | | | |
|---|---|---|---|---|
| coating weight = 0.40 g/msi in surface density coating application method = offset mode phr = parts per hundred | | | | |

In other example embodiments, the print-receptive coatings may include one or more additives. For example, the print-receptive coatings may include wax, which improves antiblocking, but adversely affects printability.

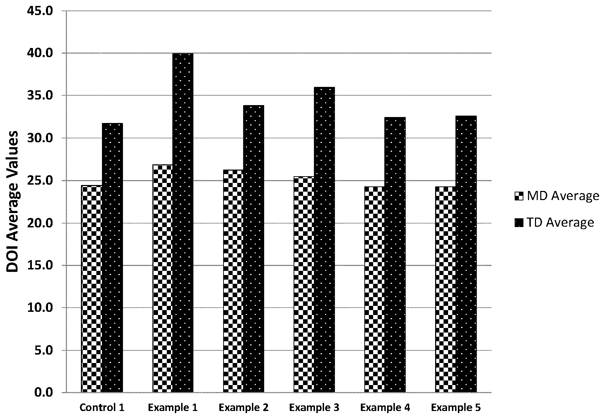

Turning now to DOI, the Figure is a graphical representation of the average machine-direction ("MD") and transverse-direction ("TD") distinction of image on the print-receptive coatings of the biaxially oriented, metallized films disclosed as examples 1-5 in Tables 1 and 3. DOI is a quantification of the distinctness (clarity) of images reflected by the metallized film. For the Figure , the measurements were made with an Elcometer 408 Gloss & DOI Meter that employed ElcoMaster Data Management software V2.0.53. and these average DOIs are reported in the Figure . DOI, itself, provides an indication of how sharp a reflected image of an object may be. DOI may also be described with terms like brilliance, sharpness or clarity. Structures may be seen clearly and distinctly when an edge is reflected sharply and with high contrast, and thus DOI is excellent. As compared to gloss, *i.e.,* specular reflection, DOI provides further details about specular reflection by indicating how the specular reflected light is distributed around a specular angle.

As the data in the Figure shows, application of the above-described, print-receptive coatings disclosed in Tables 1 and 2 results in minimal change to the DOI performance of the coated, metallized films in comparison to the control, *i.e.,* an uncoated metallized base film.

In Table 5, the metallized BOPP base film is a 50 µm in thickness and the core layer comprises REPOL HO34SG, a homopolypropylene from Reliance Industries-India. The skin layers on each side of the core is composed of homopolypropylene REPOL HO34SG with 1.5% Polybatch^{®} ABPP-10 from A. Schulman.

**Table 5**

| Metallized Laver | Metallized |
|---|---|
| Optionally Treated Skin Laver | REPOL HO34SG + 1.5%ABPP-10 |
| Core Layer | polypropylene |
| | REPOL HO34SG |
| Optionally Treated Skin Laver | REPOL HO34SG + 1.5%ABPP-10 |
| Print-Receptive Coating Laver | Print-Receptive Coating |

The print-receptive coating as described in Table 4was applied to the metallized film. The optical density of the metallized film is measured as 2.3. DOI of the metallized film before and after coating is reported in Table 6, which shows DOI decreases by < 30% in TD and ≤ 50% in MD for the metallized layer as measured on the print-receptive coating. Example 6 is not encompassed by the exact wording of claim 1 but is considered as useful for understanding the invention. In other embodiments, the oriented film may also have a DOI decrease of ≤ 15% in MD and ≤ 30% in TD for the metallized layer when measured atop the print-receptive coating, such as shown by the Figure.

**Table 6**

| Example 6 | DOI (MD) | DOI (TD) |
|---|---|---|
| Before coating | 68 | 48.4 |
| After coating | 34.5 | 35.4 |

Table 7 is an example embodiment of a metallized, BOPP base film, which has a high DOI that then receives a print-receptive coating and is consistent with the description of the coated, metallized films of this disclosure. The BOPP base film is 50 µm in thickness and the core layer is composed of Total PPH4050, a homopolypropylene from Total Petrochemicals. The tie layer as indicated is composed of PPH4050, a homopolypropylene from Total Petrochemicals. The skin layers on each side of the core is composed of Adsyl^{®} 5C39F, an ethylene-propylene-butene terpolymer available from LyondellBasell. In other example embodiments, the base film may be 100 µm or less.

**Table 7**

| Metallized Layer | Metallized |
|---|---|
| Optionally Treated Skin Layer | polypropylene and subjected to surface treatment ("treated") (100% Adsyl^{®} 5C39F available from LvondellBasell) |
| Tie Layer | polypropylene |
| | Total PPH4050 |
| Core Layer | polypropylene |
| | Total PPH4050 |
| Optionally Treated Skin Layer | polypropylene and subjected to surface treatment ("treated") (100% Adsyl^{®} 5C39F available from LvondellBasell) |
| Print-Receptive Coating Layer | Print-Receptive Coating |

The optical density of the metallized, base film is measured as 2.33. The DOI of the metallized, base film before coating is 70 in the machine direction and 78 in the transverse direction. These DOI values indicate films having a premium metallized appearance.

Looking at other aspects of the coated, metallized films, UV-ink print and adhesion tests were also performed to investigate the fitness-for use of these films in packaging and labeling applications. Table 8 provides the results from UV-ink adhesion tests on five samples as percentages of total power of the unit; in this case, the unit was set at 60% of unit total power, which is 2000 watts. Each of these five samples was tested with and without subjecting the base film to a pre-print-press corona treater. The treater "treated" or energized the print-receptive coating layer's surface.

A rationale for testing both with and without treatment, as was done in this disclosure, is because films offered in label applications are laminated with an adhesive and silicone-coated liner, wherein silicone may transfer from the liner to the print face of films. This is a common phenomenon in the market, and the converting and printing industries respond with press re-treatment of the film's surface. In certain instances, the re-treatment tends to help crosslink the silicone and improve ink adhesion. Furthermore, it is noted that the measurements made or obtained in this disclosure were at or about 1 atm of pressure and a temperature of 20°C or 20-22°C.

Table 8 shows improvements in UV-ink print performance for the metallized films that are print-receptive coated as compared to the control, *i.e.,* an uncoated metallized film, wherein the example coatings are those previously described in Table 3. Examples 1, 2 and 5 show greater improvements than examples 3 and 4. Notably, although example 3 exhibits antiblocking, a desirable feature when a film is unrolled, the UV-ink adhesion performance is unacceptable, just like it is for example 4 too. And despite example 5 having acceptable UV-ink adhesion performance, this example of the coated, metallized film provides the metallic layer with a blue haze that results in the example being deemed unacceptable.

**Table 8**

| | | | Ink Adhesion No Re-Treatment | | | Ink Adhesion Re-Treatment | | |
|---|---|---|---|---|---|---|---|---|
| Sample ID | 600 Tape | 610 Tape | 810 Tape | Scapa Tape | 600 Tape | 610 Tape | 810 Tape | Scapa Tape |
| Control | 5% | 5% | 5% | 5% | 5% | 35% | 5% | 5% |
| Example 1 | 100% | 100% | 100% | 100% | 100% | 100% | 100% | 100% |
| Example 2 | 90% | 100% | 100% | 100% | 100% | 100% | 100% | 100% |
| Example 3 | 60% | 99% | 75% | 25% | 95% | 100% | 98% | 75% |
| Example 4 | 75% | 95% | 80% | 60% | 95% | 100% | 98% | 85% |
| Example 5 | 100% | 100% | 100% | 100% | 100% | 100% | 100% | 100% |

| | | | | | | | | |
|---|---|---|---|---|---|---|---|---|
| *Tapes* = *3M Scotch tape 600-3*/*4 in width, 3M Scotch tape 610-1 in width, 3M Scotch tape 810-1 in width and a Scapa 1129 tape 25 mm width from Scapa. Approximately 6" in length is applied on the coated film and let to adhere for 1 minute. The tape is then pulled out.* | | | | | | | | |

It is further disclosed that any of the coatings described in Tables 3 and 4 may be applied to the high DOI metallized film described in Table 8 in order to obtain a premium or high clarity appearance metallized film.

While the foregoing is directed to example embodiments of the disclosed invention, other and further embodiments may be devised without departing from the basic scope thereof, wherein the scope of the disclosed apparatuses, systems and methods are determined by one or more claims.

## Claims

1. A biaxially oriented film comprising:
a base film having a first side and a second side;
a metallized layer on the first side; and
a print-receptive coating on the second side, wherein the print-receptive coating comprises one or more acrylic polymers,
wherein the biaxially oriented film has no blocking tendency, and
wherein the biaxially oriented film has a distinctness of image decrease of ≤ 15% in a machine direction for the metallized layer when measured atop the print-receptive coating.

2. The biaxially oriented film of claim 1, wherein the base film comprises a core layer, one or more skin layers on either or both sides of the core layer, and, optionally, one or more tie layers between the core and the one or more skin layers.

3. The biaxially oriented film of claim 1, wherein the base film consists essentially of polypropylene-based polymers.

4. The biaxially oriented film of claim 1, wherein a distinctness of image measurement is greater in a transverse direction than in the machine direction.

5. The biaxially oriented film of claim 1, wherein a distinctness of image is at least ≥ 40 in the machine direction when measured atop the print-receptive coating.

6. The biaxially oriented film of claim 1, wherein the base film is transparent, translucent or both.

7. The biaxially oriented film of claim 1, wherein the film has no blue haze appearance.

8. The biaxially oriented film of claim 1, further comprising an adhesive layer on an exterior surface of the film that is located above the metallized layer.

9. The biaxially oriented film of claim 1, further comprising one or more coating layers on the metallized layer.

10. The biaxially oriented film of claim 9, further comprising a primer layer intermediate to the one or more coating layers, the one or more coating layers and the metallized layer, or combinations thereof.

11. The biaxially oriented film of claim 9, wherein the one or more coating layers comprises a sealing layer, a barrier layer, an adhesive-receptive layer, antiblocking layer or combinations thereof.

12. The biaxially oriented film of claim 9, wherein the one or more coating layers is laminated to a substrate.

13. The biaxially oriented film of claim 1, wherein the base film comprises a thickness of 100 µm or less.

14. The biaxially oriented film of claim 1, wherein the print-receptive coating comprises at least 90 % UV-ink adhesion subsequent to applying tape for one minute to printed ink with or without retreatment on the print-receptive coating.

15. The biaxially oriented film of claim 1, wherein the base film is metallized prior to application of the print receptive coating.

## Patentansprüche

1. Biaxial orientierte Folie, umfassend:
eine Basisfolie, die eine erste Seite und eine zweite Seite aufweist;
eine metallisierte Schicht an der ersten Seite; und
eine druckaufnehmende Beschichtung an der zweiten Seite, wobei die druckaufnehmende Beschichtung ein oder mehrere Acrylpolymere umfasst,
wobei die biaxial orientierte Folie keine Blockneigung aufweist und
wobei die biaxial orientierte Folie eine Abnahme einer Abbildungsschärfe von ≤ 15 % in einer Maschinenrichtung für die metallisierte Schicht aufweist, wenn sie oben auf der druckaufnehmenden Beschichtung gemessen wird.

2. Biaxial orientierte Folie nach Anspruch 1, wobei die Basisfolie eine Kernschicht, eine oder mehrere Hautschichten an einer oder beiden Seiten der Kernschicht und optional eine oder mehrere Bindeschichten zwischen dem Kern und der einen oder den mehreren Hautschichten umfasst.

3. Biaxial orientierte Folie nach Anspruch 1, wobei die Basisfolie im Wesentlichen aus polypropylenbasierten Polymeren besteht.

4. Biaxial orientierte Folie nach Anspruch 1, wobei eine Messung der Abbildungsschärfe in einer Querrichtung größer als in der Maschinenrichtung ist.

5. Biaxial orientierte Folie nach Anspruch 1, wobei eine Abbildungsschärfe mindestens ≥ 40 in der Maschinenrichtung ist, wenn sie oben auf der druckaufnehmenden Beschichtung gemessen wird.

6. Biaxial orientierte Folie nach Anspruch 1, wobei die Basisfolie transparent, transluzent oder beides ist.

7. Biaxial orientierte Folie nach Anspruch 1, wobei die Folie kein Erscheinen einer blauen Trübung aufweist.

8. Biaxial orientierte Folie nach Anspruch 1, ferner umfassend eine Haftschicht an einer Außenoberfläche der Folie, die sich oberhalb der metallisierten Schicht befindet.

9. Biaxial orientierte Folie nach Anspruch 1, ferner umfassend eine oder mehrere Beschichtungsschichten an der metallisierten Schicht.

10. Biaxial orientierte Folie nach Anspruch 9, ferner umfassend eine Primerschicht intermediär zu der einen oder den mehreren Beschichtungsschichten, der einen oder den mehreren Beschichtungsschichten und der metallisierten Schicht oder Kombinationen davon.

11. Biaxial orientierte Folie nach Anspruch 9, wobei die eine oder die mehreren Beschichtungsschichten eine Versiegelungsschicht, eine Sperrschicht, eine haftmittelaufnehmende Schicht, eine Antiblockschicht oder Kombinationen davon umfassen.

12. Biaxial orientierte Folie nach Anspruch 9, wobei die eine oder die mehreren Beschichtungsschichten auf ein Substrat laminiert sind.

13. Biaxial orientierte Folie nach Anspruch 1, wobei die Basisfolie eine Dicke von 100 µm oder weniger umfasst.

14. Biaxial orientierte Folie nach Anspruch 1, wobei die druckaufnehmende Beschichtung mindestens 90 % UV-Tintenhaftung im Anschluss an ein Aufbringen von Klebeband für eine Minute auf gedruckte Tinte mit oder ohne nochmalige Behandlung an der druckaufnehmenden Beschichtung umfasst.

15. Biaxial orientierte Folie nach Anspruch 1, wobei die Basisfolie vor einer Aufbringung der druckaufnehmenden Beschichtung metallisiert wird.

## Revendications

1. Film orienté biaxialement comprenant :
un film de base ayant un premier côté et un second côté ; une couche métallisée sur le premier côté ; et
un revêtement de réception d'impression sur le second côté, dans lequel le revêtement de réception d'impression comprend un ou plusieurs polymères acryliques,
dans lequel le film orienté biaxialement n'a pas de tendance de blocage, et
dans lequel le film orienté biaxialement a une netteté de la diminution d'image de ≤ 15 % dans un sens machine pour la couche métallisée lorsque mesurée au-dessus du revêtement de réception d'impression.

2. Film orienté biaxialement selon la revendication 1, dans lequel le film de base comprend une couche centrale, une ou plusieurs couches de peau sur l'un ou les deux côtés de la couche centrale, et, éventuellement, une ou plusieurs couches de liaison entre le noyau et la ou les couches de peau.

3. Film orienté biaxialement selon la revendication 1, dans lequel le film de base est constitué sensiblement de polymères à base de polypropylène.

4. Film orienté biaxialement selon la revendication 1, dans lequel une netteté de mesure d'image est plus grande dans un sens transversal que dans le sens machine.

5. Film orienté biaxialement selon la revendication 1, dans lequel une netteté d'image est au moins ≥ 40 dans le sens machine lorsque mesurée au-dessus du revêtement de réception d'impression.

6. Film orienté biaxialement selon la revendication 1, dans lequel le film de base est transparent, translucide ou les deux.

7. Film orienté biaxialement selon la revendication 1, dans lequel le film n'a pas d'apparence de flou bleu.

8. Film orienté biaxialement selon la revendication 1, comprenant en outre une couche adhésive sur une surface extérieure du film qui est située au-dessus de la couche métallisée.

9. Film orienté biaxialement selon la revendication 1, comprenant en outre une ou plusieurs couches de revêtement sur la couche métallisée.

10. Film orienté biaxialement selon la revendication 9, comprenant en outre une couche d'apprêt intermédiaire à la ou aux couches de revêtement, à la ou aux couches de revêtement et à la couche métallisée, ou des combinaisons de celles-ci.

11. Film orienté biaxialement selon la revendication 9, dans lequel la ou les couches de revêtement comprennent une couche d'étanchéité, une couche barrière, une couche réceptrice d'adhésif, une couche anti-blocage ou des combinaisons de celles-ci.

12. Film orienté biaxialement selon la revendication 9, dans lequel la ou les couches de revêtement sont stratifiées à un substrat.

13. Film orienté biaxialement selon la revendication 1, dans lequel le film de base comprend une épaisseur de 100 µm ou moins.

14. Film orienté biaxialement selon la revendication 1, dans lequel le revêtement de réception d'impression comprend au moins 90 % d'adhérence à encre UV après l'application de ruban pendant une minute à de l'encre imprimée avec ou sans retraitement sur le revêtement de réception d'impression.

15. Film orienté biaxialement selon la revendication 1, dans lequel le film de base est métallisé avant l'application du revêtement de réception d'impression.
